# EUROPEAN PATENT SPECIFICATION

(11) **EP 3 978 179 B1**
(45) Date of publication and mention of the grant of the patent: **04.10.2023**
(21) Application number: 20819074.4
(22) Date of filing: 24.04.2020
(51) Int. Cl.: B23K 26/00, B23K 26/70, G01N 21/958

(54) **LASER PROCESSING HEAD AND LASER PROCESSING DEVICE PROVIDED WITH SAME**
LASERBEARBEITUNGSKOPF UND LASERBEARBEITUNGSVORRICHTUNG DAMIT
TÊTE DE TRAITEMENT LASER ET DISPOSITIF DE TRAITEMENT LASER LA COMPRENANT

(30) Priority: 03.06.2019 JP 2019103835
(43) Date of publication of application: 06.04.2022
(73) Proprietor: Panasonic Intellectual Property Management Co., Ltd., Osaka-shi, Osaka 540-6207 (JP)
(72) Inventor: WANG, Jingbo, Osaka-shi, Osaka 540-6207 (JP); NISHIO, Masatoshi, Osaka-shi, Osaka 540-6207 (JP); SHIBATA, Kenzo, Osaka-shi, Osaka 540-6207 (JP); NISHIHARA, Manabu, Osaka-shi, Osaka 540-6207 (JP)
(74) Representative: Vigand, Philippe
(86) International application number: PCT/JP2020/017623
(87) International publication number: WO 2020/246170

(56) References cited:
- EP-A1- 0 956 498
- EP-B1- 0 956 498
- DE-A1- 19 605 018
- DE-A1- 19 605 018
- DE-U1- 20 314 918
- JP-A- H01 186 296
- JP-A- 2002 361 452
- JP-A- 2014 237 150
- JP-A- 2017 196 629
- JP-A- 2018 075 610
- US-A1- 2007 291 379

## Description

### TECHNICAL FIELD

The present invention relates to a laser processing head that emits a laser beam emitted by a laser oscillator toward a workpiece, and a laser processing device including the laser processing head.

### BACKGROUND ART

PTL 1 discloses a laser processing head that emits a laser beam emitted by a laser oscillator toward a workpiece through a protective glass. The laser processing head includes a shield holder, an optical sensor attached to the shield holder, and the protective glass provided on the shield holder. The shield holder includes an opening formed through the shield holder, and a light passing hole formed in an inner peripheral surface of the opening. The optical sensor is attached to the shield holder while having a light receiving surface facing the inside of the opening through the light passing hole. The protective glass is provided in the opening of the shield holder while having an outer peripheral surface facing the light receiving surface of the optical sensor. In this laser processing head, a part of the laser beam emitted by the laser oscillator is scattered by contamination adhering to a front surface of the protective glass and reflected by the front surface, a back surface, and the outer peripheral surface of the protective glass, and the inner peripheral surface of the opening of the shield holder. The reflected laser beam is emitted from an opposed region on the outer peripheral surface of the protective glass, the opposed region facing the light receiving surface of the optical sensor. Then, the amount of scattered light emitted from the opposed region is detected by the optical sensor as a numerical value indicating a degree of contamination on the front surface of the protective glass.

### Citation List

### Patent Literature

PTL 1: Japanese Translation of PCT International Application No. 2002-515341

### SUMMARY OF THE INVENTION

### Technical problem

Unfortunately, the outer peripheral surface of the protective glass and the inner peripheral surface of the opening of the shield holder disclosed in PTL 1 are generally low in reflectance, so that fine contamination adhering to the front surface of the protective glass may not be reflected in a detection value of the optical sensor.

The present invention has been made in view of such a point, and an object of the present invention is to enable finer contamination to be reflected in a detection value of an optical sensor and enable contamination on a protective glass to be detected at an early stage.

### Solution to problem

To achieve the above object, the present invention provides a laser processing head including: a shield holder that has an opening formed through the shield holder and at least one light passing hole formed in an inner peripheral surface of the opening; at least one optical sensor that has a light receiving surface facing the inside of the opening through the at least one light passing hole and is attached to the shield holder; and a protective glass that has an outer peripheral surface facing the light receiving surface of the at least one optical sensor and is provided in the opening of the shield holder, the protective glass transmitting a laser beam emitted by a laser oscillator to emit the laser beam toward a workpiece, and the protective glass including a reflective coating film formed in a region in the outer peripheral surface except an opposed region facing the light receiving surface of the at least one optical sensor, or the shield holder including the reflective coating film formed in a region in the inner peripheral surface of the opening except the light passing hole.

This configuration increases reflectance on the outer peripheral surface of the protective glass or the inner peripheral surface of the opening of the shield holder as compared with the case where the reflective coating film is not formed on the outer peripheral surface of the protective glass or the inner peripheral surface of the opening of the shield holder, so that the amount of scattered light incident on the light receiving surface of the optical sensor increases. Thus, as compared with the case where the reflective coating film is not formed on the outer peripheral surface of the protective glass or the inner peripheral surface of the opening of the shield holder, finer contamination can be reflected in a detection value of the optical sensor, and thus contamination on the protective glass can be detected at an early stage.

### Advantageous effect of invention

The present invention enables finer contamination to be reflected in the detection value of the optical sensor, and enables contamination on the protective glass to be detected at an early stage.

### BRIEF DESCRIPTION OF DRAWINGS

FIG. 1 is a schematic diagram illustrating a configuration of a laser processing device.
FIG. 2 is a schematic view illustrating a structure of a laser processing head.
FIG. 3A is a plan view of a protective glass unit.
FIG. 3B is a sectional view taken along line IIIb-IIIb in FIG. 3A.
FIG. 4(a) is a plan view of a second protective glass, and FIG. 4(b) is a side view of the second protective glass.
FIG. 5 is a functional block diagram of a laser processing device.
FIG. 6 is a graph illustrating a relationship between a detection value of an optical sensor of a protective glass unit and time.
FIG. 7(a) corresponds to FIG. 3A for a second exemplary embodiment, and FIG. 7(b) corresponds to FIG. 3B for the second exemplary embodiment.
FIG. 8A is a plan view of a shield holder.
FIG. 8B is a sectional view taken along line VIIIb-VIIIb in FIG. 8A.
FIG. 9A is a plan view of a pressing ring.
FIG. 9B is a sectional view taken along line IXb-IXb in FIG. 9A.

### DESCRIPTION OF EMBODIMENTS

Hereinafter, exemplary embodiments of the present invention will be described in detail with reference to the drawings. The following description of the preferred exemplary embodiments is inherently only an example and is not intended at all to limit the present invention, applications of the present disclosure, or use of the present invention.

In the following description, the term, "aligning", means not only strict aligning but also aligning reflecting assembly tolerance and processing tolerance in manufacturing.

### (First exemplary embodiment)

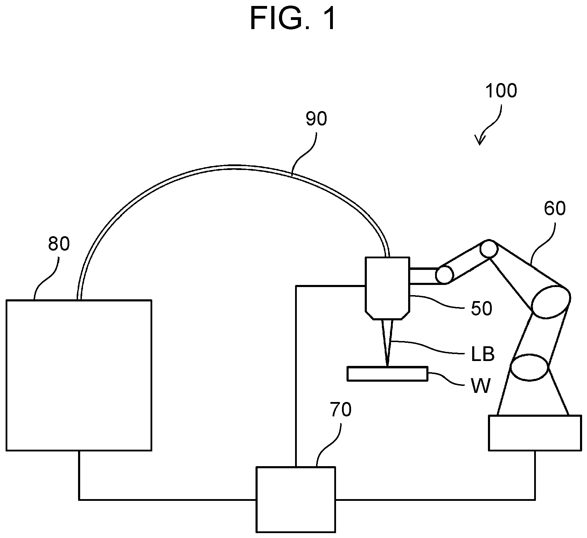

FIG. 1 illustrates a configuration of laser processing device 100, and laser processing device 100 includes laser processing head 50, manipulator 60, controller 70, laser oscillator 80, and optical fiber 90.

Laser processing head 50 irradiates workpiece W with laser beam LB from optical fiber 90. Laser processing head 50 is attached to a leading end of manipulator 60. Manipulator 60 moves laser processing head 50. Controller 70 controls operation of laser processing head 50, operation of manipulator 60, and laser oscillation of laser oscillator 80. Laser oscillator 80 generates laser beam LB by oscillation and emits laser beam LB to optical fiber 90. Optical fiber 90 guides laser beam LB emitted from laser oscillator 80 to laser processing head 50. The configuration described above allows laser processing device 100 to irradiate workpiece W with laser beam LB emitted from laser oscillator 80 along a desired trajectory by operating laser processing head 50 and manipulator 60.

Laser processing device 100 is used to weld workpiece W.

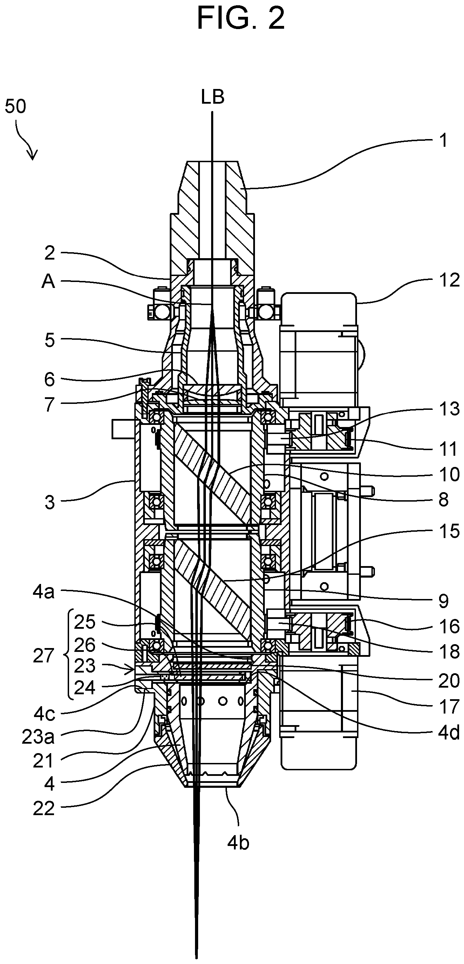

As illustrated in FIG. 2, laser processing head 50 includes connector 1 in a substantially tubular shape connected to optical fiber 90. Connector 1 is connected at its end portion opposite to optical fiber 90 with one end portion of lens case 2 in a substantially tubular shape. Lens case 2 is connected at the other end portion to one end portion of body case 3 in a substantially tubular shape. Body case 3 is connected at the other end portion to an end portion of inner nozzle 4 on a side close to inlet 4a. Inner nozzle 4 has an end portion on a side close to outlet 4b, the end portion being tapered.

Lens case 2 is provided inside with lens holder 5 in a substantially tubular shape that is disposed substantially along lens case 2. Lens holder 5 is provided inside near its end portion on a side close to body case 3 with collimation lens 6 and focus lens 7 that are disposed from a side opposite to body case 3 while having front and back surfaces facing an axial direction of lens holder 5. Inside lens holder 5, emission end A of optical fiber 90 is located. Collimation lens 6 collimates laser beam LB emitted from emission end A of optical fiber 90 and spread. Focus lens 7 concentrates laser beam LB collimated by collimation lens 6 to focus laser beam LB on near a processing point on workpiece W.

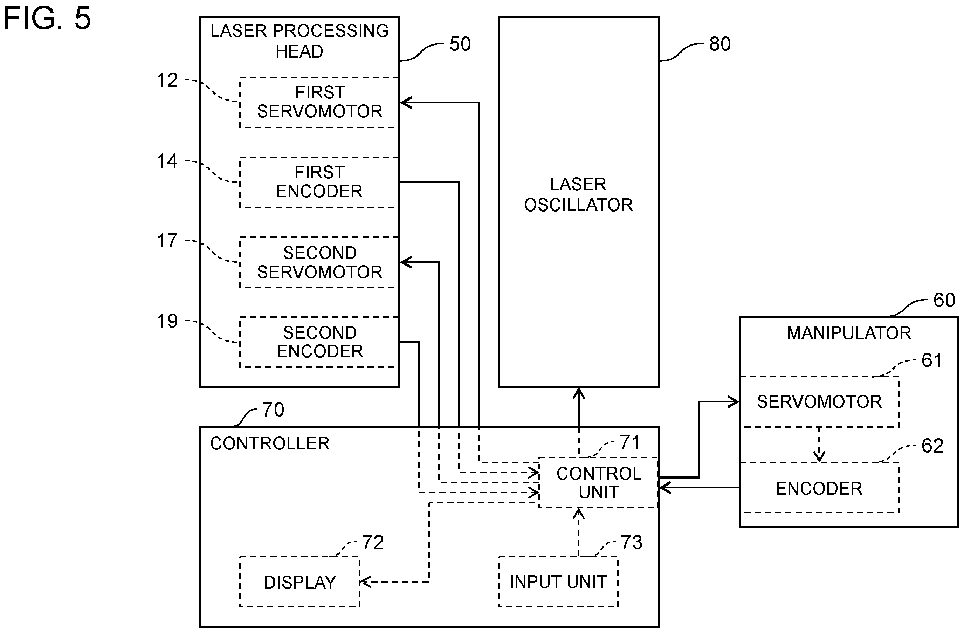

Body case 3 is provided inside with first and second holders 8, 9 each in a substantially tubular shape that are disposed in order from a side close to lens case 2 substantially along body case 3. Inside first holder 8, first parallel plate 10 is fixed. First holder 8 is provided on its outer peripheral side with first belt pulley 11 disposed with its axial direction oriented in an axial direction of first holder 8. First belt pulley 11 is attached to first servomotor 12 that rotates first belt pulley 11. To first belt pulley 11 and first holder 8, first timing belt 13 is attached. Thus, first holder 8 can be rotated by rotating first belt pulley 11 with first servomotor 12. First servomotor 12 is provided around its periphery with first encoder (illustrated in only FIG. 5) 14 that detects the amount of rotation, a rotation speed, and a rotation direction of first servomotor 12.

Inside second holder 9, second parallel plate 15 is fixed. Second holder 9 is provided on its outer peripheral side with second belt pulley 16 disposed with its axial direction oriented in an axial direction of second holder 9. Second belt pulley 16 is attached to second servomotor 17 that rotates second belt pulley 16. To second belt pulley 16 and second holder 9, second timing belt 18 is attached. Thus, second holder 9 can be rotated by rotating second belt pulley 16 with second servomotor 17. Second servomotor 17 is provided around its periphery with second encoder (illustrated in only FIG. 5) 19 that detects the amount of rotation, a rotation speed, and a rotation direction of second servomotor 17. First and second holders 8, 9 each have a rotation axis aligning with an optical axis of laser beam LB incident on first parallel plate 10 from optical fiber 90.

Inner nozzle 4 is provided near its end portion on a side close to inlet 4a with first protective glass 20 that is disposed with front and back surfaces facing an axial direction of inner nozzle 4. Inner nozzle 4 is provided in its part in a circumferential direction slightly closer to outlet 4b than first protective glass 20 with holder insertion port 4c that is formed passing through the part and extending in the circumferential direction. Inner nozzle 4 is also provided in its inner peripheral surface near the end portion on the side close to inlet 4a with stepped portion 4d that is formed over the entire periphery excluding holder insertion port 4c while having an inner edge on a side close to outlet 4b that is positioned inward from that on a side close to inlet 4a. Inner nozzle 4 is provided on its outer peripheral side with nozzle holder 21 in a substantially tubular shape that is disposed to cover an outer peripheral surface of inner nozzle 4 in a region from a portion slightly below an end edge of inner nozzle 4 on a side close to inlet 4a toward outlet 4b to a substantial center in the axial direction. Nozzle holder 21 is provided on its side close to outlet 4b with outer nozzle 22 that is disposed to cover an end portion of inner nozzle 4 on the side close to outlet 4b from an outer peripheral side.

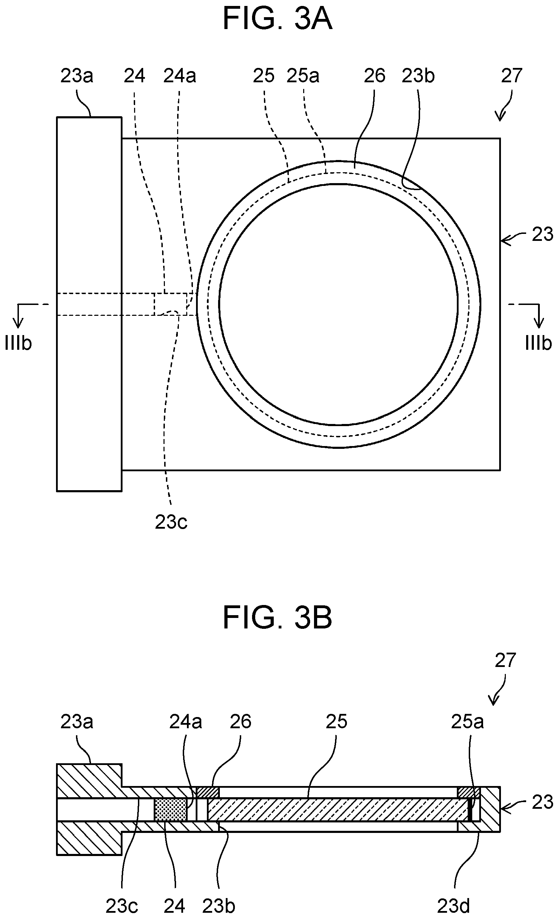

Into holder insertion port 4c of inner nozzle 4, shield holder 23 in a substantially rectangular plate-like shape illustrated in FIGS. 3A and 3B is inserted with a plate surface facing toward the outlet. Shield holder 23 has a longitudinal direction along a direction of the insertion. Shield holder 23 has one longitudinal end portion fitted to stepped portion 4d of inner nozzle 4 from the inside. Shield holder 23 is made of, for example, an aluminum alloy, a steel material, or stainless steel. Shield holder 23 is provided in the other longitudinal end portion with overhanging portion 23a that is formed overhanging to both front and back sides, and both lateral sides. Shield holder 23 is provided at it portion on a side closer to overhanging portion 23a than a longitudinal center with opening 23b in a circular shape that is formed passing through the shield holder in its thickness direction. Opening 23b is provided at a portion close to overhanging portion 23a in its inner peripheral surface with optical sensor mounting hole 23c that is formed as one light passing hole. Optical sensor mounting hole 23c is positioned in a central portion of shield holder 23 in the thickness direction. This optical sensor mounting hole 23c communicates with a central portion of an end surface of shield holder 23 on a side close to overhanging portion 23a. Inside optical sensor mounting hole 23c, one optical sensor 24 is attached with light receiving surface 24a facing the inside of opening 23b through optical sensor mounting hole 23c. Opening 23b is provided at a portion close to outlet 4b (on an emission side) in its inner peripheral surface with ridge portion 23d that extends in the circumferential direction while protruding inward over the entire circumference. Opening 23b is provided in its inner peripheral surface with a female thread (not illustrated) that is cut over the entire inner peripheral surface except a portion where optical sensor mounting hole 23c is formed and a portion where ridge portion 23d protrudes. Needless to say, the female thread (not illustrated) may be cut only in a minimum region necessary for attaching pressing ring 26 described later in the inner peripheral surface of opening 23b except the portion where optical sensor mounting hole 23c is formed and the portion where ridge portion 23d protrudes.

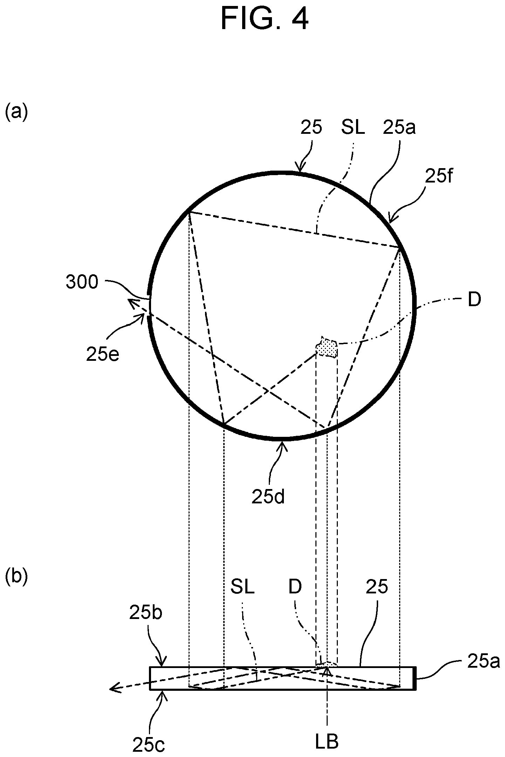

In opening 23b of shield holder 23, second protective glass 25 in a circular plate-like shape, which is also illustrated in FIGS. 4(a) and 4(b), is provided with an outer peripheral surface facing the inner peripheral surface of opening 23b and light receiving surface 24a of optical sensor 24. Second protective glass 25 has front and back surfaces 25b, 25c on each of which an antireflection coating film (not illustrated) is entirely formed. As the antireflection coating film, a dielectric film made of oxide, fluoride, or the like is used. Outer peripheral surface 25d of second protective glass 25 includes opposed region 25e facing light receiving surface 24a of optical sensor 24 and region 25f except opposed region 25e. According to the invention, in region 25f in outer peripheral surface 25d of second protective glass 25, reflective coating film 25a is entirely formed. Outer peripheral surface 25d of second protective glass 25 includes a region, opposed region in outer peripheral surface of second protective glass 25e in which no reflective coating film 25a is formed, the region constituting reflected light outlet portion 300. Reflected light outlet portion 300 is circumferentially positioned to align with light receiving surface 24a of optical sensor 24. Reflective coating film 25a may be formed by vapor deposition of a metal having high reflectance for laser beam LB, such as gold, silver, or aluminum. Reflective coating film 25a is formed to have a reflectance of 90% or more when laser beam LB is perpendicularly incident on a surface where reflective coating film 25a is formed. The reflectance is desirably close to 100%.

In opening 23b of shield holder 23, pressing ring 26 in an annular plate-like shape is disposed to press an outer peripheral portion of second protective glass 25 from both sides in a direction passing through opening 23b along with ridge portion 23d. Pressing ring 26 is made of, for example, an aluminum alloy, a steel material, or stainless steel. Pressing ring 26 has an outer peripheral surface on which a male thread (not illustrated) is cut, and the male thread is screwed with the female thread in the inner peripheral surface of opening 23b of shield holder 23. Shield holder 23, optical sensor 24, second protective glass 25, and pressing ring 26 constitute protective glass unit 27. Thus, protective glass unit 27 can be integrally assembled by inserting optical sensor 24 into optical sensor mounting hole 23c of shield holder 23 and screwing the male thread of pressing ring 26 with the female thread of shield holder 23 while second protective glass 25 is placed on ridge portion 23d of shield holder 23. Pressing ring 26 is not limited to a circular shape, and may have an outer shape of a polygon such as a triangle, a square, or a hexagon.

As illustrated in FIG. 5, manipulator 60 includes servomotor 61 and encoder 62 for each joint shaft.

Controller 70 includes control unit 71, display 72, and input unit 73.

Control unit 71 is configured to control output of a laser beam from laser oscillator 80 according to a control program received from input unit 73.

Control unit 71 controls rotation speed and the amount of rotation of first and second servomotors 12, 17 by transmitting a rotation command to first and second servomotors 12, 17 according to the control program received from input unit 73 and feedback signals from first and second encoders 14, 19 provided in laser processing head 50.

Control unit 71 also controls rotation speed and the amount of rotation of servo motor 61 by transmitting a position command to servo motor 61 provided in manipulator 60 according to the control program received from input unit 73 and a feedback signal from encoder 62 provided in manipulator 60.

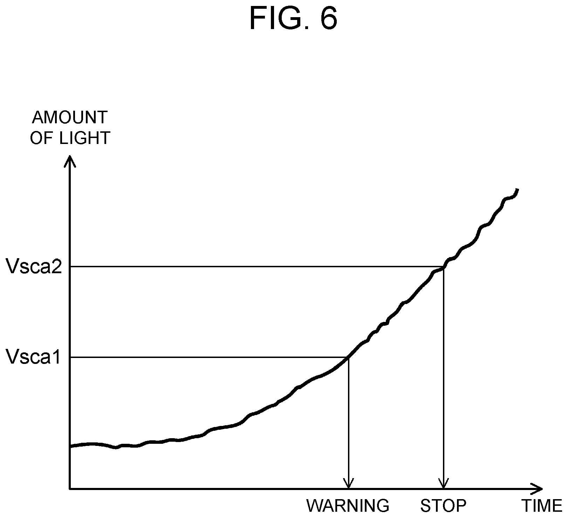

As illustrated in FIG. 6, control unit 71 causes display 72 to display and output a warning when the amount of light detected by optical sensor 24 exceeds first threshold value Vsca1 that is predetermined. Control unit 71 also controls laser oscillator 80 to stop laser oscillation when the amount of light detected by optical sensor 24 exceeds second threshold value Vsca2 larger than first threshold value Vsca1.

Display 72 is configured to display an output state of laser oscillator 80, an operation state of manipulator 60, a warning, and the like under control of control unit 71.

Input unit 73 is configured to set an output of laser oscillator 80 and an input of a control program for determining movement speed and the amount of movement of manipulator 60. Input unit 73 is also configured to set an input of a control program or the like for determining rotation speed and rotation time of first and second servomotors 12, 17.

Controller 70 may be provided with a teaching pendant that creates (teaches) and executes programs, and the teaching pendant may implement functions of display 72 and input unit 73. The teaching pendant also may create the control program.

Then, laser processing device 100 described above is configured such that when laser oscillator 80 emits laser beam LB, emitted laser beam LB is guided to laser processing head 50 through optical fiber 90. Laser beam LB guided to laser processing head 50 is collimated by collimation lens 6 and then concentrated by focus lens 7. First and second parallel plates 10, 15 adjust an optical axis of laser beam LB having passed through focus lens 7, and then laser beam LB passes through first protective glass 20 and second protective glass 25 to irradiate workpiece W. Then, when contamination D adheres to front surface 25b of second protective glass 25 as illustrated in FIGS. 4(a) and 4(b), a part of laser beam LB incident on second protective glass 25 is scattered by contamination D. Scattered light SL is multiple-reflected by reflective coating films 25a on front and back surfaces 25b, 25c and outer peripheral surface 25d of second protective glass 25. A part of reflected scattered light SL is emitted from reflected light outlet portion 300 that is opposed region 25e in outer peripheral surface 25d of second protective glass 25 facing light receiving surface 24a of optical sensor 24. Scattered light SL incident on a region of outer peripheral surface 25d of second protective glass 25, where reflective coating film 25a is formed, has a reflectance higher than that of scattered light SL incident on front and back surfaces 25b, 25c of second protective glass 25. FIG. 4 illustrates an optical path of a part of scattered light SL with a virtual line. Then, the amount of scattered light SL emitted from reflected light outlet portion 300 is detected by optical sensor 24 as a numerical value indicating a degree of contamination on front surface 25b of second protective glass 25. When the amount of light detected by optical sensor 24 exceeds first threshold value Vsca1, display 72 outputs and displays a warning under control of control unit 71. This enables a user who visually recognizes the warning output and displayed to recognize that second protective glass 25 needs to be replaced or cleaned soon. When the amount of light detected by optical sensor 24 exceeds second threshold value Vsca2 due to sudden contamination on second protective glass 25 for some reason during laser processing, laser oscillator 80 stops laser oscillation under control of control unit 71. This enables not only prompting the user to replace or clean second protective glass 25, but also preventing deterioration in processing quality due to contamination on front surface 25b of second protective glass 25. At this time, reflective coating film 25a formed on outer peripheral surface 25d of second protective glass 25 increases reflectance of outer peripheral surface 25d of second protective glass 25 as compared with the case where reflective coating film 25a is not formed, so that the amount of scattered light SL incident on light receiving surface 24a of optical sensor 24 is increased. Thus, even when only one optical sensor 24 is provided as in the first exemplary embodiment, finer contamination can be reflected in a detection value of optical sensor 24, and thus contamination on second protective glass 25 can be detected at an early stage. As a result, timing of output of a warning due to contamination D adhering to second protective glass 25 and timing of stopping laser oscillation can be more appropriately controlled.

### (Second exemplary embodiment)

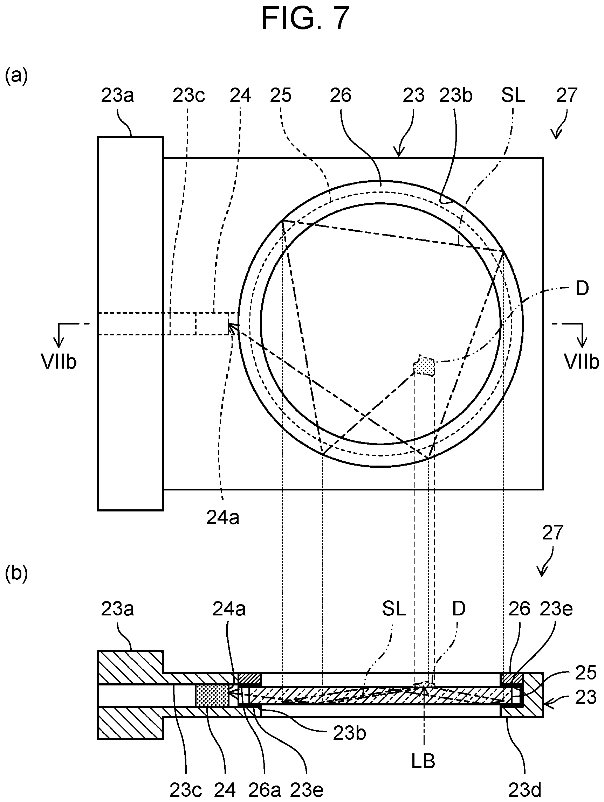

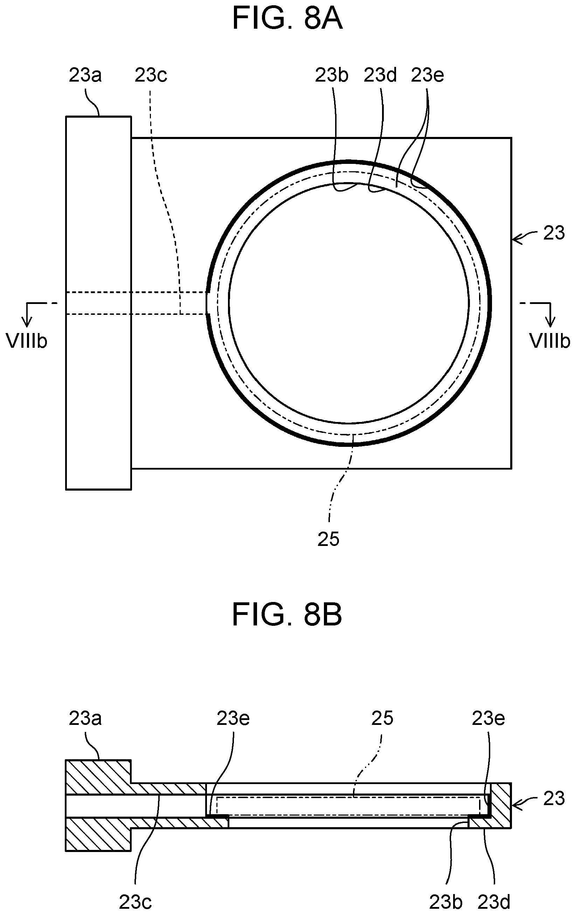

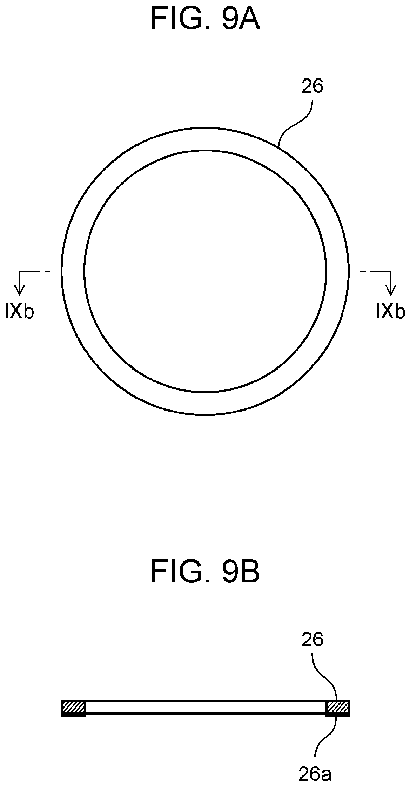

FIG. 7(a) corresponds to FIG. 3A for a second exemplary embodiment of the present invention, and FIG. 7(b) corresponds to FIG. 3B for the second exemplary embodiment. Opening 23b of shield holder 23 has an inner peripheral surface provided with a substantially central portion in a thickness direction of shield holder 23. The substantially central portion includes optical sensor mounting hole 23c and a region except optical sensor attachment hole 23c. Ridge portion 23d has a surface on a side close to inlet 4a (incidence side) and a surface on a side close to outlet 4b (emission side). As also illustrated in FIGS. 8A and 8B, shield holder 23 of the second exemplary embodiment includes according to the invention reflective coating film 23e that is continuously formed over the entire region except optical sensor mounting hole 23c and on the surface of ridge portion 23d on the side close to outlet 4b (emission side). Reflective coating film 23e is not formed on not only a portion where optical sensor mounting hole 23c is formed and a portion on the side close to inlet 4a (incidence side) on the inner peripheral surface of opening 23b of shield holder 23, but also a leading end of ridge portion 23d. As also illustrated in FIGS. 9A and 9B, reflective coating film 26a is continuously formed over the entire surface close to inlet 4a of front and back surfaces of pressing ring 26. That is, pressing ring 26 is disposed with the surface on which reflective coating film 26a is formed, the surface facing the surface of ridge portion 23d on which reflective coating film 23e is formed. Reflective coating film 25a is not formed on outer peripheral surface 25d of second protective glass 25. In a region where reflective coating film 23e is formed on the inner peripheral surface of opening 23b of shield holder 23, i.e., a region facing outer peripheral surface 25d of second protective glass 25, a female thread is not cut to reflect light in a common direction. The female thread is cut in a minimum region in the inner peripheral surface of opening 23b of shield holder 23, being necessary for attaching pressing ring 26.

Another structure is identical to that of the first exemplary embodiment, so that the same components are denoted by the same reference numerals and duplicated detailed description thereof will be eliminated.

Thus, reflective coating films 23e, 26a are respectively formed on shield holder 23 and pressing ring 26 that are to be replaced less frequently than second protective glass 25 in the second exemplary embodiment, so that costs can be reduced as compared with the case where reflective coating film 25a is formed on second protective glass 25 as in the first exemplary embodiment.

Additionally, reflective coating film 23e is also formed on the surface of ridge portion 23d of shield holder 23 on the side close to outlet 4b and the surface of pressing ring 26 on the side close to inlet 4a, so that the reflectance on the surface of ridge portion 23d on the side close to outlet 4b and the surface of pressing ring 26 on the side close to inlet 4a increases as compared with the case where the reflective coating film is formed only on the inner peripheral surface of opening 23b of shield holder 23, thereby increasing the amount of scattered light SL to be incident on light receiving surface 24a of optical sensor 24. Thus, finer contamination can be reflected in a detection value of optical sensor 24, and as a result, the timing of output of a warning due to contamination adhering to second protective glass 25 and the timing of stopping laser oscillation can be more appropriately controlled.

Although the first and second exemplary embodiments cause controller 70 to output a warning display when the amount of light detected by optical sensor 24 exceeds first threshold value Vsca1, a warning sound may be output, or a warning signal received by a device outside controller 70 may be output.

Although the first and second exemplary embodiments cause controller 70 to perform processing of outputting a warning when the amount of light detected by optical sensor 24 exceeds first threshold value Vsca1, another predetermined processing may be performed. Similarly, although controller 70 is caused to perform processing of stopping laser oscillation of laser oscillator 80 when the amount of light detected by optical sensor 24 exceeds second threshold value Vsca2, another predetermined processing may be performed.

Although one set of optical sensor mounting hole 23c and optical sensor 24 is provided in the first and second exemplary embodiments, a plurality of sets may be provided. When detection values of the plurality of optical sensors 24 satisfy predetermined conditions, controller 70 may perform predetermined processing such as outputting a warning and performing control of stopping laser oscillation of laser oscillator 80.

Although in the second exemplary embodiment, reflective coating film 23e is formed on the region of the inner peripheral surface of opening 23b of shield holder 23 except optical sensor mounting hole 23c and the surface of ridge portion 23d on the side close to outlet 4b, reflective coating film 23e may not be provided on the surface of ridge portion 23d on the side close to outlet 4b.

Although in the second exemplary embodiment, reflective coating film 26a is formed over the entire surface of pressing ring 26 on the side close to inlet 4a, reflective coating film 26a may not be formed.

### INDUSTRIAL APPLICABILITY

The laser processing head of the present invention can reflect finer contamination on a detection value of the optical sensor, and is useful for application to a laser processing device.

### REFERENCE MARKS IN THE DRAWINGS

23: shield holder
23b: opening
23c: optical sensor mounting hole (light passing hole)
23d: ridge portion
23e: reflective coating film
24: optical sensor
24a: light receiving surface
25: second protective glass
25a: reflective coating film
25b: front surface of second protective glass
25c: back surface of second protective glass
25d: outer peripheral surface of second protective glass
25e: opposed region in outer peripheral surface of second protective glass
25f: region in outer peripheral surface of second protective glass except opposed region
26: pressing ring
26a: reflective coating film
50: laser processing head
70: controller
80: laser oscillator
90: optical fiber
100: laser processing device
LB: laser beam
W: workpiece
Vsca1: first threshold value
Vsca2: second threshold value

## Claims

1. A laser processing head (50) comprising:
a shield holder (23) that has an opening (23b) formed through the shield holder and at least one light passing hole (23c) formed in an inner peripheral surface of the opening;
at least one optical sensor (24) that has a light receiving surface (24a) facing the inside of the opening through the at least one light passing hole and is attached to the shield holder; and
a protective glass (25) that has an outer peripheral surface (25d) facing the light receiving surface of the at least one optical sensor and is provided in the opening of the shield holder,
the protective glass transmitting a laser beam (LB) emitted by a laser oscillator to emit the laser beam toward a workpiece, **characterized in**
the protective glass including a reflective coating film (23e) formed in a region (25f) in the outer peripheral surface (25d) except an opposed region (25e) facing the light receiving surface of the at least one optical sensor, or the shield holder including the reflective coating film (23e) formed in a region in the inner peripheral surface of the opening except the light passing hole (23c).

2. The laser processing head according to claim 1, further comprising:
a pressing ring (26) in an annular plate-like shape including a reflective coating film (26a) formed on one of front and back surfaces,
wherein the opening of the shield holder has an inner peripheral surface provided with a ridge portion (23d) extending in a circumferential direction while protruding inward, and a reflective coating film is formed on one surface of the ridge portion in a direction passing through the opening, and
the pressing ring is disposed in the opening to press an outer peripheral portion of the protective glass (25) from both sides in a direction passing through the opening along with the ridge portion while the reflective coating film formed on the one surface of the pressing ring faces the reflective coating film formed on the one surface of the ridge portion of the shield holder.

3. The laser processing head according to claim 1 or 2, wherein the at least one optical sensor (24) is one optical sensor.

4. A laser processing (100) device comprising:
the laser processing head (50) according to claim 3;
a laser oscillator (80);
an optical fiber (90) that guides a laser beam emitted by the laser oscillator to the laser processing head; and
a controller (70) that performs predetermined processing when the amount of light detected by the one optical sensor exceeds a predetermined threshold value.

5. The laser processing device according to claim 4, wherein the predetermined processing is output of a warning.

6. The laser processing device according to claim 4, wherein
the predetermined processing is control of stopping laser oscillation of the laser oscillator.

## Patentansprüche

1. Laserbearbeitungskopf (50), der Folgendes umfasst:
einen Abschirmungshalter (23), der eine Öffnung (23b) aufweist, die durch den Abschirmungshalter gebildet ist, und mindestens ein Lichtdurchgangsloch (23c) aufweist, das in einer inneren Umfangsoberfläche der Öffnung gebildet ist;
mindestens einen optischen Sensor (24), der eine Lichtempfangsoberfläche (24a) aufweist, die dem Inneren der Öffnung durch das mindestens eine Lichtdurchgangsloch zugewandt ist und an dem Abschirmungshalter befestigt ist; und
ein Schutzglas (25), das eine äußere Umfangsoberfläche (25d) aufweist, die der Lichtempfangsoberfläche des mindestens einen optischen Sensors zugewandt ist und in der Öffnung des Abschirmungshalters bereitgestellt ist,
wobei das Schutzglas einen Laserstrahl (LB), der von einem Laseroszillator emittiert wird, durchlässt, um den Laserstrahl hin zu einem Werkstück zu emittieren, **dadurch gekennzeichnet, dass** das Schutzglas einen reflektierenden Beschichtungsfilm (23e) umfasst, der in einer Region (25f) in der äußeren Umfangsoberfläche (25d) außer einer gegenüberliegenden Region (25e) gebildet ist, die der Lichtempfangsoberfläche des mindestens einen optischen Sensors zugewandt ist, oder der Abschirmungshalter den reflektierenden Beschichtungsfilm (23e) umfasst, der in einer Region in der inneren Umfangsoberfläche der Öffnung außer dem Lichtdurchgangsloch (23c) gebildet ist.

2. Laserbearbeitungskopf nach Anspruch 1, der ferner Folgendes umfasst:
einen Drückring (26) in einer ringförmigen, plattenartigen Form, der einen reflektierenden Beschichtungsfilm (26a) umfasst, der auf einer von der vorderen und der hinteren Oberfläche gebildet ist,
wobei die Öffnung des Abschirmungshalters eine innere Umfangsoberfläche aufweist, die mit einem Gratabschnitt (23d) versehen ist, der sich in einer Umfangsrichtung erstreckt und dabei nach innen hervorsteht, und ein reflektierender Beschichtungsfilm auf einer Oberfläche des Gratabschnitts in einer Richtung gebildet ist, die durch die Öffnung verläuft, und
der Drückring in der Öffnung angeordnet ist, um einen äußeren Umfangsabschnitt des Schutzglases (25) von beiden Seiten in einer Richtung zu drücken, die durch die Öffnung entlang des Gratabschnitts verläuft, während der reflektierende Beschichtungsfilm, der auf der einen Oberfläche des Drückrings gebildet ist, dem reflektierenden Beschichtungsfilm zugewandt ist, der auf der einen Oberfläche des Gratabschnitts des Abschirmungshalters gebildet ist.

3. Laserbearbeitungskopf nach Anspruch 1 oder 2, wobei der mindestens eine optische Sensor (24) ein optischer Sensor ist.

4. Laserbearbeitungsvorrichtung (100), die Folgendes umfasst:
den Laserbearbeitungskopf (50) nach Anspruch 3;
einen Laseroszillator (80);
eine optische Faser (90), die einen von dem Laseroszillator emittierten Laserstrahl zum Laserbearbeitungskopf führt; und
eine Steuereinrichtung (70), die vorbestimmte Verarbeitung durchführt, wenn die Menge von Licht, das durch den einen optischen Sensor detektiert wird, einen vorbestimmten Schwellenwert überschreitet.

5. Laserbearbeitungsvorrichtung nach Anspruch 4, wobei die vorbestimmte Verarbeitung die Ausgabe einer Warnung ist.

6. Laserbearbeitungsvorrichtung nach Anspruch 4, wobei die vorbestimmte Verarbeitung die Steuerung des Anhaltens der Laseroszillation des Laseroszillators ist.

## Revendications

1. Tête de traitement au laser (50) comprenant :
un porte-écran (23) qui possède une ouverture (23b) formée à travers le porte-écran et au moins un trou de passage de lumière (23c) formé dans une surface périphérique interne de l'ouverture ;
au moins un capteur optique (24) qui possède une surface de réception de lumière (24a) faisant face à l'intérieur de l'ouverture à travers l'au moins un trou de passage de lumière et est fixé au porte-écran ; et
un verre protecteur (25) qui possède une surface périphérique externe (25d) faisant face à la surface de réception de lumière de l'au moins un capteur optique et est ménagé dans l'ouverture du porte-écran,
le verre protecteur transmettant un faisceau laser (LB) émis par un oscillateur laser pour émettre le faisceau laser vers une pièce de fabrication,
**caractérisée en ce que** le verre protecteur inclut un film de revêtement réfléchissant (23e) formé dans une région (25f) dans la surface périphérique externe (25d) à l'exception d'une région opposée (25e) faisant face à la surface de réception de lumière de l'au moins un capteur optique, ou le porte-écran inclut le film de revêtement réfléchissant (23e) formé dans une région dans la surface périphérique interne de l'ouverture à l'exception du trou de passage de lumière (23c).

2. Tête de traitement au laser selon la revendication 1, comprenant en outre :
une bague de pressage (26) sous une forme de type plaque annulaire incluant un film de revêtement réfléchissant (26a) formé sur l'une de surfaces avant et arrière,
dans laquelle l'ouverture du porte-écran possède une surface périphérique interne munie d'une partie nervure (23d) s'étendant dans une direction circonférentielle tout en faisant saillie vers l'intérieur, et un film de revêtement réfléchissant est formé sur une surface de la partie nervure dans une direction traversant l'ouverture, et
la bague de pressage est disposée dans l'ouverture pour presser une partie périphérique externe du verre protecteur (25) par les deux côtés dans une direction traversant l'ouverture conjointement avec la partie nervure tandis que le film de revêtement réfléchissant formé sur l'une surface de la bague de pressage fait face au film de revêtement réfléchissant formé sur l'une surface de la partie nervure du porte-écran.

3. Tête de traitement au laser selon la revendication 1 ou 2, dans laquelle
l'au moins un capteur optique (24) est un seul capteur optique.

4. Dispositif de traitement au laser (100) comprenant :
la tête de traitement laser (50) selon la revendication 3 ;
un oscillateur laser (80) ;
une fibre optique (90) qui guide un faisceau laser émis par l'oscillateur laser jusqu'à la tête de traitement au laser ; et
un dispositif de commande (70) qui réalise un traitement prédéterminé lorsque la quantité de lumière détectée par l'un seul capteur optique dépasse une valeur seuil prédéterminée.

5. Dispositif de traitement au laser selon la revendication 4, dans lequel
le traitement prédéterminé est la sortie d'un avertissement.

6. Dispositif de traitement au laser selon la revendication 4, dans lequel
le traitement prédéterminé est la commande de l'arrêt de l'oscillation laser de l'oscillateur laser.
